# EUROPÄISCHE PATENTSCHRIFT

(11) **EP 3 537 532 B1**
(45) Veröffentlichungstag und Bekanntmachung des Hinweises auf die Patenterteilung: **07.05.2025**
(21) Anmeldenummer: 19160623.5
(22) Anmeldetag: 04.03.2019
(51) Int. Cl.: H01M 10/613, H01M 10/617, H01M 10/625, H01M 10/633, H01M 10/663, H01M 10/6568

(54) **VERFAHREN ZUR KÜHLUNG EINER TRAKTIONSBATTERIE EINES ELEKTRISCH ANTREIBBAREN FAHRZEUGS**
METHOD FOR COOLING A TRACTION BATTERY OF AN ELECTRICALLY POWERED VEHICLE
PROCEDE DE REFROIDISSEMENT D'UNE BATTERIE DE TRACTION D'UN VEHICULE A MOTEUR ELECTRIQUE

(30) Priorität: 08.03.2018 DE 102018203537
(43) Veröffentlichungstag der Anmeldung: 11.09.2019
(73) Patentinhaber: VOLKSWAGEN AKTIENGESELLSCHAFT, 38440 Wolfsburg (DE)
(72) Erfinder: Albrecht, Jan-Christoph, 38442 Wolfsburg (DE); Wachsmuth, Carsten, 38179 Schwülper (Lagesbüttel) (DE); Schaar, Bastian, 38116 Braunschweig (DE)

(56) Entgegenhaltungen:
- DE-A1- 102008 027 293
- DE-A1- 102009 029 629
- DE-A1- 102013 225 521

## Beschreibung

Die Erfindung betrifft eine Kühlanordnung, mit einer mehrere Batteriemodule aufweisenden Traktionsbatterie mit den Merkmalen des Patentanspruchs 1. Die Erfindung betrifft auch ein Verfahren zum Betrieb einer Kühlanordnung gemäß den Merkmalen des Patentanspruchs 3.

Eine Kühlanordnung mit den Merkmalen vom Oberbegriff des Patentanspruchs 1 ist aus der DE 10 2013 225 521 A1 bekannt geworden. Konkret sind zwei Kühlleitungen mit einem Kältemittel unter mehreren Batteriemodulen entlanggeführt und nehmen Wärme von den Zellen der Batteriemodule auf. Die Kühlleitungen verlaufen lotrecht zu den Zellen der Batteriemodule, wobei die Strömungsrichtung des Kältemittels in der ersten Leitung entgegengesetzt zu einer Strömungsrichtung des Kältemittels in der zweiten Leitung verläuft. Durch das in den Kühlleitungen transportierte Kältemittel wird die in der Traktionsbatterie anfallende Wärme abgeführt. Dazu sind die Kühlleitungen an den zu kühlenden Zellen des Batteriemoduls wärmeleitend vorbeigeführt. Zusätzlich wird vorgeschlagen, mehrere Batteriemodule hintereinander in Reihe zu schalten. Dies kann durch einen, die Batteriemodule verbindenden, parallelen Verlauf der Kühlleitungen oder auch durch einen die Batteriemodule verbindenden, mäanderförmigen Verlauf der Kühlleitungen erfolgen. Gleichermaßen wird auch eine Parallelschaltung der Kühlleitungen offenbart.

Aus der DE 10 2008 027 293 A1 ist eine Vorrichtung zur Kühlung von elektrischen Speicherelementen (Zellen) einer Fahrzeugbatterie bekannt. Die Vorrichtung umfasst einen als Strangpressprofil ausgebildeten Kühlkörper mit Kanälen, die von einem Fluid (Kältemittel, Kühlmittel) durchströmt werden. Die Zellen stehen mit dem Kühlkörper in thermischem Kontakt und geben Wärme an das Fluid ab. Es wird auch beschrieben, dass der Kühlkörper mit einem sogenannten Zwei-Flut-Design ausgeführt sein kann, bei dem ein erstes Fluid (z.B. das Kältemittel) durch erste Kanäle und ein zweites Fluid (z.B. das Kühlmittel) durch zweite Kanäle des Kühlkörpers strömt. Eingangs- und ausgangsseitig können die Kanäle mit Sammlern verbunden sein, die den jeweiligen Fluidstrom auf mehrere Kanäle verteilen. Wenn ein Kältemittelkreis im Fahrzeug (welcher zu einer Klimaanlage gehört) nicht betrieben werden kann oder ausfällt, so können die Zellen noch durch das Kühlmittel im Kühlmittelkreis gekühlt werden.

In der DE 10 2009 029 629 A1 wird ein Wärmeübertrager zur Temperierung für Fahrzeugbatterien offenbart, bei dem durch rechteckförmig umlaufende Flachrohre Kammern gebildet werden, die zur Aufnahme von Batterieeinheiten dienen. In den Flachrohren ist ein Kältemittel geführt, welches über ein Verteilerrohr verteilt und über ein Sammelrohr wieder gesammelt wird. Das Kältemittel durchströmt die Flachrohre parallel in einer Richtung. Auch die Durchströmung benachbarter Flachrohre im Gegenstrom wird vorgeschlagen.

Schließlich ist der EP 2 924 797 A1 ebenfalls eine Vorrichtung zur Kühlung eines Batteriemoduls zu entnehmen. Das Batteriemodul weist mehrere Zellen auf, wobei die Temperatur jeder Zelle über einen Temperatursensor kontrolliert wird. Zusätzlich ist das Batteriemodul von einer Kühlleitung durchsetzt, in der ein Kältemittel geführt ist. Die Kühlleitung ist durch mehrere Ventile fluidisch segmentierbar. Eine Steuereinheit erhält Signale von den Temperatursensoren, wobei in Abhängigkeit dieser Signale eine Antriebseinheit für das Kältemittel und die besagten Ventile derart angesteuert werden, dass das Kältemittel auf unterschiedliche Weise durch das Batteriemodul fließt und dieses je nach Temperaturzustand unterschiedlich kühlt.

Nachteilig beim aktuellen Stand dieser bekannten Kältemittel-Verdampfungskühlungen ist, dass es bei einer Unterversorgung mit Kältemittel zu einer Temperatur-Inhomogenität innerhalb der Kältemittel-führenden Transporteinrichtungen kommt, welche beispielsweise als Leitungen, Rohre oder dergleichen ausgebildet sein können. Konkret kann eine örtliche Überhitzung des Kältemittels aufgrund vollständiger Verdampfung auftreten, was zu einer Inhomogenität der Temperatur der Batteriezellen führt. Eine dadurch bedingte Temperaturspreizung wirkt sich negativ auf die Leistungsfähigkeit und die Lebensdauer der Batteriezellen aus. Daher wird eine Kältemittel-Verdampfungskühlung von Batteriemodulen in der Regel nur dann eingesetzt, wenn insgesamt nur vergleichsweise geringe thermische Leistungen durch die Traktionsbatterie anfallen. Die Verfügbarkeit der erforderlichen Kälteleistungen zur Kühlung der Traktionsbatterie ist dann zumeist gegeben.

Zukünftige elektrisch antreibbare Fahrzeuge werden deutlich größere elektrische Leistungen aufweisen und/oder Schnelllade-Funktionalitäten erfordern. Es ist dann damit zu rechnen, dass sich ohne Gegenmaßnahmen Betriebspunkte mit fehlender Kälteleistung häufen und Belastungen der Traktionsbatterie durch Temperaturspreizung zunehmen.

Der vorliegenden Erfindung liegt daher die Aufgabe zu Grunde, eine Kühlanordnung bereitzustellen, durch welche die Grundvoraussetzung für eine praktikable und anwendungsgerechte Abstufung der Kühlung in diskreten, kühlenden Leistungsstufen ermöglicht wird. Es soll dabei eine möglichst gleichmäßige Kühlung der Traktionsbatterie möglich sein, wobei ein Verhältnis der in den kühlenden Leistungsstufen abzugebenden Kälteleistung zueinander bei 1:3 oder 2:3 realisiert werden soll, ohne dass unterhalb oder zwischen den Batteriemodulen der zu kühlenden Traktionsbatterie eine vollständige Verdampfung des Kältemittels und/oder eine örtliche Überhitzung auftritt.

Des Weiteren liegt der vorliegenden Erfindung die Aufgabe zu Grunde, eine geeignetes Verfahren zum Betrieb der Kühlanordnung bereitzustellen, bei dem auch bei nicht ausreichend zur Verfügung stehender Kälteleistung zur Kühlung der Traktionsbatterie eine gleichmäßige Temperierung der Traktionsbatterie gewährleistet werden kann.

Vorliegende Aufgaben werden hinsichtlich des Verfahrens mit den Merkmalen von Patentanspruch 3 und hinsichtlich der Kühlanordnung mit den Merkmalen von Patentanspruch 1 gelöst.

Vorteilhafte Weiterbildungen beziehungsweise Ausgestaltungen der Kühlanordnung sind den jeweils abhängigen Ansprüchen zu entnehmen.

Verfahrenstechnisch geht die Erfindung aus von einem Verfahren zur Kühlung einer Traktionsbatterie eines elektrisch antreibbaren Fahrzeugs, wobei ein Kältemittel als Kühlmedium eingesetzt und in einem Massenstrom bestimmter Größe durch wenigstens einen Kanal an der Traktionsbatterie entlanggeführt wird. Der wenigstens eine Kanal kann beispielsweise als Rohr, Flachrohr oder dergleichen ausgebildet sein. Er steht in wärmeleitender Verbindung mit der Traktionsbatterie bzw. mit einzelnen Zellen der Traktionsbatterie.

Es wird vorgeschlagen, dass zunächst eine verfügbare Kälteleistung zur Kühlung der Traktionsbatterie ermittelt wird. Die verfügbare Kälteleistung zur Kühlung der Traktionsbatterie ist abhängig von einer verfügbaren Gesamt-Kälteleistung und der notwendigen Kälteleistung zur Kühlung der Fahrgastzelle. Konkret berechnet sich die verfügbare Kälteleistung zur Kühlung der Traktionsbatterie aus der Differenz der verfügbaren Gesamt-Kälteleistung und der für die Fahrgastzelle benötigten Kälteleistung.

In Abhängigkeit der ermittelten, verfügbaren Kälteleistung zur Kühlung der Traktionsbatterie wird anschließend die Größe des Massenstroms vom Kältemittel derart geregelt, dass entweder keine Kälteleistung an die Traktionsbatterie abgegeben wird oder die abgegebene Kälteleistung zur Batteriekühlung in Abhängigkeit der verfügbaren Kälteleistung zur Batteriekühlung jeweils eine von mehreren, kühlenden Leistungsstufen annimmt.

Mit anderen Worten erfolgt eine Kühlung der Traktionsbatterie entweder gar nicht oder nur in festgelegten oder festzulegenden, diskreten Leistungsstufen.

Durch einen derartigen Verfahrensansatz wird die Voraussetzung dafür geschaffen, dass man im Falle einer zu geringen, verfügbaren Kälteleistung zur Batteriekühlung den Ort einer Überhitzung bzw. vollständigen Verdampfung des Kältemittels kontrollieren und damit Temperaturinhomogenitäten innerhalb des Batteriemoduls bzw. innerhalb der Batteriezellen vorbeugen kann.

Es kann derart verfahren werden, dass die verfügbare Kälteleistung zur Batteriekühlung (regelungstechnisch) in mehrere Leistungsbereiche unterteilt wird. Jedem Leistungsbereich wird ein unterer Grenzwert zugeordnet, wobei jede der besagten, vorbestimmten Leistungsstufen dem unteren Grenzwert eines bestimmten Leistungsbereichs entspricht.

Auf diese Weise kann bei geeigneter Auslegung der Kühlanordnung zur Durchführung des Verfahrens (siehe weiter unten) sichergestellt werden, dass eine vollkommene Verdampfung und damit verbundene Überhitzung des Kältemittels nur an solchen Orten stattfindet, wo sie in Kauf genommen werden kann und nicht zu einer Temperaturspreizung innerhalb des Batteriemoduls führt.

Zur regelungstechnischen Vereinfachung des Verfahrens wird vorgeschlagen, dass ausschließlich drei vorbestimmte Leistungsstufen angenommen werden können.

Es wird vorgeschlagen, die in den kühlenden Leistungsstufen jeweils abzugebende Kälteleistung in Abhängigkeit der Temperatur der Traktionsbatterie festzulegen. Konkret werden mit steigender Batterietemperatur die Werte für die in einer kühlenden Leistungsstufe jeweils abzugebende Kälteleistung angehoben. Dies erfolgt jedoch derart, dass das Verhältnis der in den kühlenden Leistungsstufen abzugebenden Kälteleistung stets gleichbleibt, also beispielweise bei 1:2, 1:3 oder 2:3 gehalten wird. Anders ausgedrückt werden die unteren Grenzwerte der kühlenden Leistungsbereiche in Abhängigkeit der Temperatur der Traktionsbatterie festgelegt und mit steigender Batterietemperatur angehoben.

Auf diese Weise muss nicht unbedingt eine feste Temperaturdifferenz zwischen den Batteriezellen der Traktionsbatterie und dem Kältemittel gehalten werden. Dies kann auch zur Vereinfachung des Verfahrens beitragen.

Insbesondere ist es zweckmäßig, wenn nach einer weiteren Ausbildung des Erfindungsgedankens die verfügbare Kälteleistung zur Batteriekühlung in drei Leistungsbereiche wie folgt unterteilt wird:

| | |
|---|---|
| Leistungsbereich 1: | verfügbare Kälteleistung < 1 kW, |
| Leistungsbereich 2: | 1 kW < verfügbare Kälteleistung < 3 kW und |
| Leistungsbereich 3: | verfügbare Kälteleistung > 3 kW |

Die erste Leistungsstufe kühlt dann die Traktionsbatterie gar nicht, die zweite Leistungsstufe mit einer Kälteleistung in Höhe von 1 kW und die dritte Leistungsstufe kühlt die Traktionsbatterie mit einer Kälteleistung in Höhe von 3 kW.

Durch eine derartige Verfahrensweise können unterschiedliche Betriebspunkte einer Traktionsbatterie ausreichend abgedeckt werden, wobei der regelungstechnische Aufwand in Grenzen gehalten werden kann.

Wie anfangs erwähnt, soll mit der Erfindung eine Kühlanordnung nach Anspruch 1 bereitgestellt werden.

Diese umfasst eine mehrere Batteriemodule aufweisende Traktionsbatterie. Es sind Kanäle vorhanden, durch welche ein Kältemittel senkrecht zu einer Längsausrichtung der Batteriemodule an diesen entlangführt wird. Die Kanäle stehen in wärmeleitender Verbindung mit den Batteriemodulen beziehungsweise mit Batteriezellen innerhalb der Batteriemodule. Ferner ist wenigstens ein erster Kanal vorhanden, in dem das Kältemittel in einer ersten Richtung entlang den Batteriemodulen zu wenigstens einem Verbindungselement führbar ist und wenigstens ein zweiter Kanal, in dem das Kältemittel in einer zweiten Richtung entlang den Batteriemodulen wieder zurückführbar ist. Die Richtungen beziehungsweise die Kanäle sind parallel zueinander ausgerichtet, wobei das genannte Verbindungselement die Kanäle fluidisch miteinander verbindet.

Die Kühlanordnung wird nach dem erfindungsgemäßen Verfahren zumindest in einem solchen Betriebsmodus betrieben, in dem die Traktionsbatterie ausschließlich in vorbestimmten, diskreten (also getrennten) Leistungsstufen gekühlt wird. Es erfolgt also keine kontinuierliche oder stetige Veränderung der Kälteleistung, sondern die Kühlung erfolgt stufenweise mit einer bestimmten Leistungsstufe. In jeder kühlenden Leistungsstufe ist das Kältemittel entweder bereits nach Führung durch den wenigstens einen ersten Kanal im Bereich des Verbindungselementes vollständig verdampft oder wird dort vollständig verdampft oder erst nach vollständiger Rückführung durch den wenigsten einen zweiten Kanal.

Auf diese Weise ist die Kühlanordnung optimal auf das Verfahren abgestimmt und die Vorteile des Verfahrens, nämlich eine örtlich kontrollierte Überhitzung des Kältemittels herbeiführen zu können und damit eine Temperaturspreizung zu verhindern, wird erreicht. Gemäß Merkmalen der Erfindung wird vorgeschlagen, dass die Kanäle jeweils über eine wärmeleitende Kontaktfläche derart mit den Batteriemodulen der Traktionsbatterie in wärmeleitender Verbindung stehen, dass sich ein Flächenverhältnis der gesamten Kontaktfläche des wenigstens einen hinführenden Kanals zur gesamten Kontaktfläche des wenigstens einen rückführenden Kanals von 1:2 oder 2:1 ergibt.

Dies ermöglicht eine praktikable und anwendungsgerechte Abstufung der Kühlung.

Dies wird mit weiteren Merkmalen der Erfindung dadurch auf einfache Weise gelöst, dass die Abmessungen eines jeden Kanals und eines jeden Batteriemoduls gleich sind und die Anzahl hinführender Kanäle sowie die Anzahl rückführender Kanäle derart gewählt ist, dass sich ein Verhältnis der hinführenden Kanäle zu den rückführenden Kanälen von 1:2 oder 2:1 ergibt.

Dies ermöglicht eine praktikable und anwendungsgerechte Abstufung der Kühlung also mit einem Höchstmaß an Gleichteilen.

So ist beispielsweise denkbar, dass ein hinführender Kanal und zwei rückführende Kanäle oder zwei hinführende Kanäle und vier rückführende Kanäle, usw. vorhanden sind. Auf diese Weise kann ein Kälteleistungsverhältnis der wirksamen Leistungsstufen von 1 zu 3 realisiert werden.

Alternativ ist vorstellbar, dass zwei hinführende Kanäle und ein rückführender Kanal vorhanden sind. Durch diese Ausgestaltung wird ein Kälteleistungsverhältnis in den wirksamen Leistungsstufen von 2 zu 3 realisiert.

Sollte ein Kälteleistungsverhältnis der wirksamen Leistungsstufen von 1 zu 2 sachdienlich sein, so ist es zweckmäßig, wenn die Anzahl hinführender Kanäle und die Anzahl rückführender Kanäle gleich ist. Die Realisierung anderer Kälteleistungsverhältnisse ist entsprechend denkbar.

Um den Steuerungsaufwand für die Kühlvorrichtung gering zu halten, wird vorgeschlagen, dass die Traktionsbatterie im besagten Betriebsmodus ausschließlich in zwei Leistungsstufen gekühlt wird. Beispielsweise kann eine erste kühlende Leistungsstufe die Traktionsbatterie mit einer Kälteleistung von 1 Kilowatt kühlen, während eine zweite Leistungsstufe die Traktionsbatterie mit einer Kälteleistung von 3 Kilowatt kühlt. Andere Abstufungen der Leistungsstufen sind, wie oben beschrieben, möglich.

Schließlich soll mit der vorliegenden Erfindung auch ein elektrisch antreibbares Fahrzeug unter Schutz gestellt werden, welches eine erfindungsgemäße Kühlanordnung aufweist.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht immer maßstabsgetreu. In manchen Figuren können Proportionen übertrieben dargestellt sein, um Merkmale eines Ausführungsbeispiels deutlicher hervorheben zu können.

Es zeigen, jeweils schematisch
- Fig. 1: ein Kältemittelkreislauf in einem Kraftfahrzeug zur Durchführung des erfindungsgemäßen Verfahrens,
- Fig. 2: ein Ablaufdiagramm zur Verdeutlichung des Grundgedankens des Verfahrens,
- Fig. 3: ein weiteres Diagramm zur Verdeutlichung des erfindungsgemäßen Verfahrens,
- Fig. 4: eine erfindungsgemäße Kühlanordnung zur Durchführung des Verfahrens, in einer ersten Ausführungsform,
- Fig. 5: eine exemplarische Kühlanordnung,
- Fig. 6: eine Schnittansicht gemäß Schnittverlauf VI aus Fig. 4 und
- Fig. 7: ein elektrisch antreibbares Kraftfahrzeug mit einer Kühlanordnung zur Durchführung des Verfahrens.

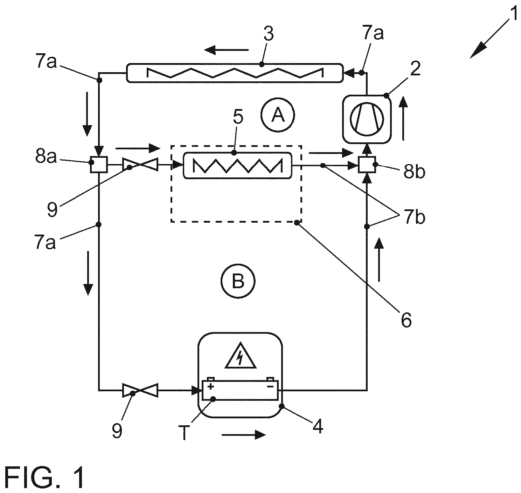

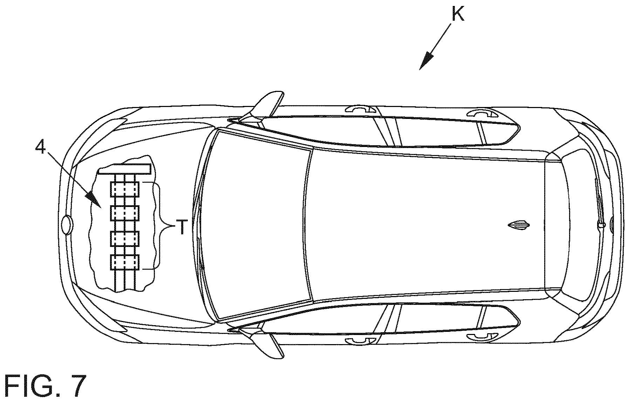

In Fig. 1 ist ein Kältemittelkreislauf 1 eines nicht näher dargestellten, elektrisch antreibbaren Kraftfahrzeugs K (vergleiche Fig. 7) dargestellt.

Der Kältemittelkreislauf 1 umfasst einen Kompressor 2, mit dem ein Kältemittel angetrieben und verdichtet wird und einen, dem Kompressor 2 nachgeschalteten Kondensator 3, in denen das verdichtete Kältemittel gekühlt wird. Das Kältemittel fließt über Hochdruck-Kühlleitungen 7a bis zu einem ersten Knotenpunkt 8a, in dem das Kältemittel über ein Expansionsventil 9 expandiert wird und in ein Klimagerät 5 des Kraftfahrzeugs K gelangt. Das Klimagerät 5 dient zur Klimatisierung einer gestrichelt angedeuteten Fahrzeugkabine 6. Anschließend gelangt das Kältemittel über eine Niederdruck-Kühlleitung 7b zu einem zweiten Knotenpunkt 8b, in der es wieder dem Kompressor 2 zugeführt wird. Durch die genannten Stationen des Kältemittels wird ein Klimakreislauf A gebildet.

Das Kältemittel, welches am Knotenpunkt 8a nicht in den Klimakreislauf A gelangt, wird über die Hochdruck-Kühlleitung 7a zu einem zweiten Expansionsventil 9 weitergeleitet, welches einem Verdampfer 4 vorgeschaltet ist, und dort entspannt. Der Verdampfer 4 dient zur Aufnahme von Wärme einer Traktionsbatterie T, was zur Verdampfung des Kältemittels führt. Anschließend wird das Kältemittel über eine Niederdruck-Kühlleitung 7b zum Knotenpunkt 8b und damit wieder dem Kompressor 2 zugeführt.

Durch den Knotenpunkt 8a, den Verdampfer 4 sowie den Knotenpunkt 8b wird ein Batterie-Kühlkreislauf B gebildet. Eine nicht näher dargestellte Auswerte- und Steuereinrichtung dient zur bedarfsgerechten Ansteuerung der erwähnten Komponenten des Kältemittelkreislaufs 1 bzw. der Klimakreisläufe A und B.

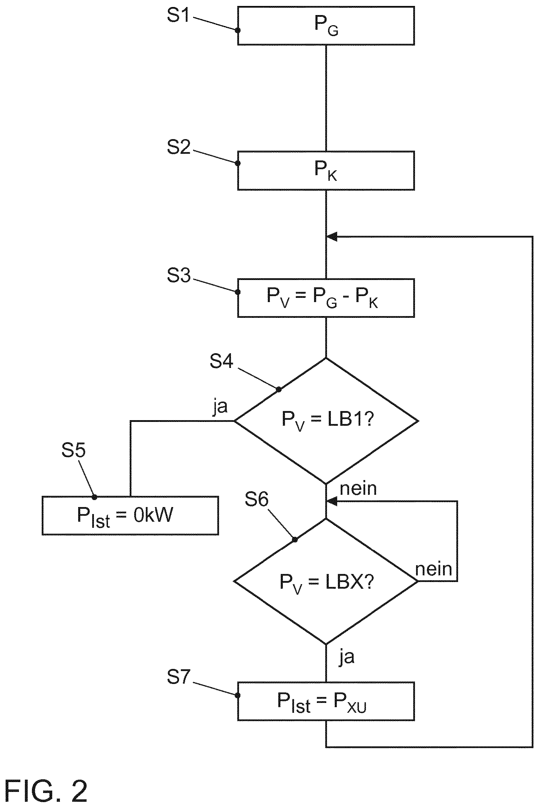

Anhand der Fig. 2 wird nun anhand eines Ablaufdiagramms dargestellt, wie eine geeignete Auswerte- und Steuereinrichtung den Kältemittelkreislauf 1, insbesondere den Batterie-Kühlkreislauf B regeln kann.

So wird in einem Schritt S1 zunächst eine Gesamt-Kälteleistung P_{G} bestimmt. Die Gesamt-Kälteleistung P_{G} ist unter anderem von der Außentemperatur, der für das Frontend des Kraftfahrzeugs K zur Verfügung stehenden Luftmenge und der erlaubten Drehzahl des Kompressors 2 abhängig.

In einem Schritt S2 wird eine Klima-Kälteleistung P_{K} bestimmt, welche zur Klimatisierung der Fahrzeugkabine 6 notwendig ist. Die Klima-Kälteleistung P_{K} ist unter anderem eine Funktion von der vor einem Klimaverdampfer vorliegenden Luftfeuchte und Lufttemperatur, von einer Sollausblastemperatur und einer Soll-Luftmenge für die Fahrzeugkabine.

In einem Schritt S3 wird aus der Differenz der Gesamt-Kälteleistung P_{G} und der Klima-Kälteleistung P_{K} eine verfügbare Kälteleistung P_{V} zur Batteriekühlung berechnet.

Wird in einem Schritt S4 ermittelt, dass die verfügbare Kälteleistung P_{V} innerhalb eines untersten Leistungsbereichs LB1 liegt, so wird in einem Schritt S5 festgelegt, dass eine Kälteleistung P_{Ist}, mit der die Traktionsbatterie T gekühlt werden soll, gleich null Kilowatt ist.

Wird im Schritt S4 allerdings ermittelt, dass die verfügbare Kälteleistung P_{V} nicht im untersten Leistungsbereich LB1 liegt, so wird in einem Schritt S6 ermittelt, in welchem Leistungsbereich LBX die verfügbare Kälteleistung P_{V} liegt.

Nach Ermittlung des entsprechenden Leistungsbereichs LBX wird in einem Schritt S7 die Kälteleistung P_{Ist} zur Kühlung der Traktionsbatterie T gleich einem unteren Grenzwert P_{XU} der Leistung im Leistungsbereich LBX gesetzt.

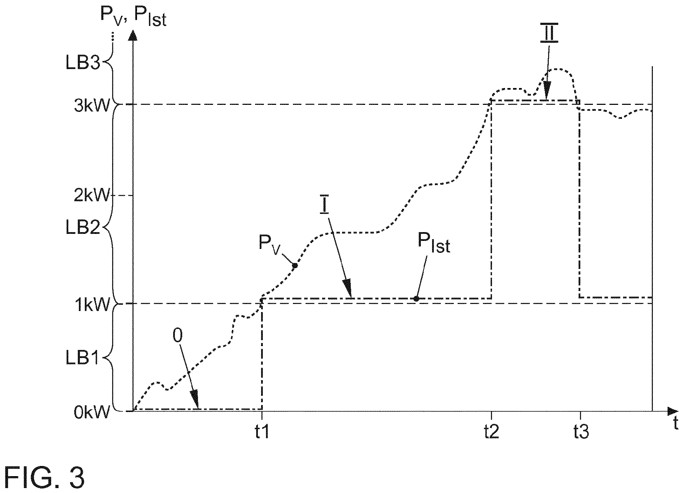

Fig. 3 soll diese Vorgehensweise noch einmal in einer anderen Darstellungsweise verdeutlichen. Hierbei sind im ersichtlichen Diagramm auf der Hochachse die verfügbare Kälteleistung P_{V} zur Batteriekühlung und die Kälteleistung P_{Ist}, mit der die Traktionsbatterie T gekühlt werden soll, aufgetragen. Auf der Längsachse ist die Zeit t dargestellt.

So wird in einer konkreten Ausgestaltung des Verfahrens regelungstechnisch in drei Leistungsbereiche LB1, LB2 und LB3 unterschieden. Der erste, unterste Leistungsbereich LB1 liegt in einem Bereich der verfügbaren Kälteleistung P_{V} in Höhe von 0 kW bis 1 kW. Der zweite Leistungsbereich LB2 liegt in einem Bereich der verfügbaren Kälteleistung P_{V} in Höhe von 1 kW bis 3 kW und der oberste Leistungsbereich LB3 nimmt über 3 kW liegende Leistungswerte an.

So ist ersichtlich, dass bis zu einem Zeitpunkt t1 die verfügbare Kälteleistung P_{V} im Leistungsbereich LB1 liegt. Dies hat zur Folge, dass bis zu diesem Zeitpunkt die Kälteleistung P_{Ist} auf 0 kW ("Leistungsstufe" 0) gesetzt wird, also einem unteren Grenzwert der Leistung im Leistungsbereich LB1 entspricht. Die Traktionsbatterie T wird also in diesem Betriebszustand gar nicht gekühlt.

Ab dem Zeitpunkt t1 gelangt die verfügbare Kälteleistung P_{V} in den Leistungsbereich LB2, so dass die Traktionsbatterie T ab dem Zeitpunkt t1 in einer kühlenden Leistungsstufe I mit einer Kälteleistung P_{Ist} in Höhe von 1 kW gekühlt wird. Dies entspricht dem unteren Grenzwert der verfügbaren Kälteleistung P_{V} im Leistungsbereich LB2.

Dies wird so lange weitergeführt, bis die ermittelte, verfügbare Kälteleistung P_{V} zum Zeitpunkt t2 in den Leistungsbereich LB3 gelangt. Zu diesem Zeitpunkt wird dann die Kälteleistung P_{Ist} zur Batteriekühlung auf den unteren Grenzwert der verfügbaren Kälteleistung P_{V} im Leistungsbereich LB3 eingestellt. Die Traktionsbatterie T wird dann also in einer kühlenden Leistungsstufe II mit einer Leistung in Höhe von 3 kW gekühlt.

Zu einem Zeitpunkt t3 fällt die verfügbare Kälteleistung P_{V} wieder in den Leistungsbereich LB2 zurück. Die Regelung veranlasst dann, dass die Traktionsbatterie T wieder mit dem unteren Grenzwert der verfügbaren Kälteleistung P_{V} im Leistungsbereich LB2, also mit 1 kW gekühlt wird.

Abweichend von den konkreten Grenzwerten und der Anzahl der Leistungsbereiche sind natürlich auch andere Werte und Zahlen denkbar.

Insbesondere ist auch denkbar, abweichend vom Ausführungsbeispiel die in den kühlenden Leistungsstufen I und II jeweils abzugebende Kälteleistung P_{Ist} in Abhängigkeit der Temperatur der Traktionsbatterie festzulegen. Konkret werden mit steigender Batterietemperatur die Werte für die in einer kühlenden Leistungsstufe I, II jeweils abzugebende Kälteleistung P_{Ist} angehoben. Dies erfolgt jedoch derart, dass das Verhältnis der in den kühlenden Leistungsstufen I, II abzugebenden Kälteleistung P_{Ist} stets gleichbleibt, also beispielweise bei 1:2, 1:3 oder 2:3 gehalten wird.

Mit anderen Worten werden die unteren Grenzwerte der kühlenden Leistungsbereiche LB2 und LB3 in Abhängigkeit der Temperatur der Traktionsbatterie festgelegt und mit steigender Batterietemperatur angehoben.

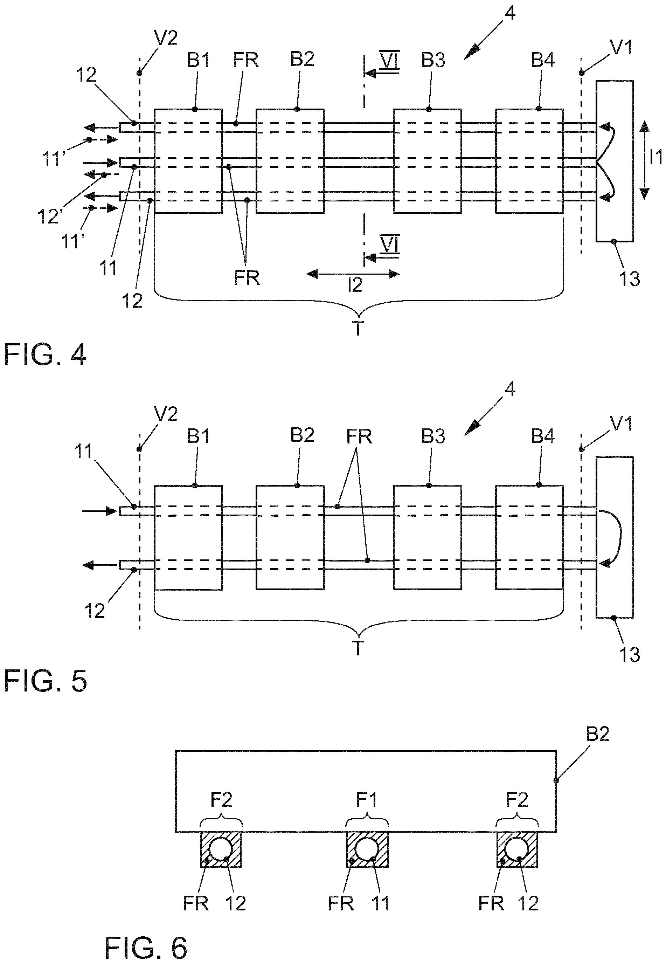

Anhand der Fig. 4 wird nun eine erste Kühlanordnung vorgestellt, die auf das erfindungsgemäße Verfahren abgestimmt ist. So weist die Kühlanordnung einen Verdampfer 4 auf, welcher aus Kanälen 11, 12 für ein Kältemittel gebildet ist. Die Kanäle 11, 12 sind mit Batteriemodulen B1 bis B4 einer Traktionsbatterie T in wärmeleitenden Kontakt gehalten.

Die Batteriemodule B1 bis B4 sind in bekannter Weise mit jeweils gleichen Abmessungen quaderförmig ausgebildet, mit einer Längsausrichtung I1. Jedes der Batteriemodule B1 bis B4 weist mehrere Batteriezellen (nicht näher dargestellt) auf, bei denen es sich vorzugsweise um Ni/MeH- oder Li-lon-Zellen handeln kann. Derartige Zellen sind als elektrochemische Energiespeicher besonders gut geeignet.

Die Kanäle 11, 12 sind im Ausführungsbeispiel Bestandteil so genannter Flachrohre FR mit einer Längsausrichtung I2. Jedes Flachrohr FR ist also von einem das Kältemittel transportierenden Kanal 11 bzw. 12 durchzogen. Dabei sind die Flachrohre FR baugleich ausgebildet und parallel unter den Batteriemodulen B1 bis B4 entlanggeführt. Jedes Flachrohr FR weist eine wärmeleitende Kontaktfläche F1 bzw. F2 mit den Batteriemodulen B1 bis B4 auf (vgl. Fig. 6). Aufgrund der erwähnten Baugleichheit sowohl der Flachrohre FR als auch der Batteriemodule B1 bis B4 sind die Kontaktflächen F1 und F2 gleich. Ferner steht die Längsausrichtung I1 der Batteriemodule B1 bis B4 lotrecht zur Längsausrichtung I2 der Flachrohre.

Das in den Figuren 4 und 6 ersichtliche, mittlere Flachrohr FR weist einen Kanal 11 auf, welcher zu einem Verbindungselement 13 hinführt. Des Weiteren sind zwei äußere Flachrohre FR mit jeweils einem Kanal 12 vorhanden, welcher ein Kältemittel, welches über den Kanal 11 zum Verbindungselement 13 geführt ist, wieder in die entgegengesetzte Richtung zurückführen. Das Verbindungselement 13, was im Ausführungsbeispiel als Sammelrohr ausgebildet ist, verbindet also den das Kältemittel hinführenden Kanal 11 mit den das Kältemittel rückführenden Kanälen 12.

Zur Durchführung des erfindungsgemäßen Verfahrens mit den in Fig. 3 konkret vorhandenen Leistungsgrenzen, ist die Kühlanordnung nun folgendermaßen ausgelegt:
Steht eine verfügbare Kälteleistung P_{V} zur Verfügung, welche sich im Leistungsbereich LB1 bewegt, so wird kein Massenstrom von Kältemittel in den Kanal 11 über einen nicht näher bezifferten Eingang geleitet. Es erfolgt also keine Kühlung der Traktionsbatterie T.

Steht eine verfügbare Kälteleistung P_{V} im Leistungsbereich LB2 zur Verfügung, so wird der Massenstrom des Kältemittels derart geregelt, dass eine Kühlung der Traktionsbatterie T mit einer Kälteleistung P_{Ist} in Höhe von 1 kW gekühlt wird. Dies hat bei der beispielhaften Auslegung der Kühlanordnung nun zur Folge, dass das in den hinführenden Kanal 11 gelangende Kältemittel so bemessen ist, dass es im Kanal 11 erst in einem solchen ersten Verdampfungsbereich V1 vollständig verdampft ist, der in Strömungsrichtung des Kältemittels nach den Batteriemodulen B1 bis B4 liegt. So kann über die ganze Länge des Kanals 11 durch ausreichende Menge an vorhandenem, noch nicht verdampftem Kältemittel eine homogene Wärmeabfuhr zwischen der Traktionsbatterie T und dem Kanal 11 gewährleistet werden. Temperaturspreizungen zwischen den Batteriemodulen B1 bis B4 beziehungsweise zwischen deren einzelnen Zellen treten nicht auf.

Das im Verdampfungsbereich V1 verdampfte Kältemittel gelangt dann in das Verbindungselement 13 und wird über die rückführenden Kanäle 12 zurück zu nicht näher bezifferten Ausgängen transportiert. Während der Rückführung nimmt das Kältemittel auf Grund des bereits gasförmigen Zustandes keine Wärme mehr auf und verändert somit den Temperaturzustand der Traktionsbatterie T nicht mehr oder zumindest nicht mehr nennenswert.

Gelangt allerdings die verfügbare Kälteleistung P_{V} in den dritten Leistungsbereich LB3, so wird der Massenstrom des Kältemittels sprunghaft derart erhöht, dass eine Kälteleistung P_{Ist} zur Batteriekühlung auf 3 kW hochgesetzt wird. Der Kältemittelstrom ist dann so hoch, dass das Kältemittel nicht bereits im ersten Verdampfungsbereich V1 vollständig verdampft, sondern noch flüssiges Kältemittel in das Verbindungselement 13 eintritt, von dort in die rückführenden Kanäle 12 gelangt und wieder durch die Kanäle 12 zurücktransportiert wird. Dabei nimmt das Kältemittel weiterhin Wärme der Traktionsbatterie T auf, solange, bis es in den Kanälen 12 erst in einem zweiten Verdampfungsbereich V2 vollständig verdampft ist.

Die Kühlanordnung ist also so ausgelegt, dass bei Durchführung des erfindungsgemäßen Verfahrens an keiner Stelle unterhalb beziehungsweise zwischen den Batteriemodulen B1 bis B4 eine vollständige Verdampfung des Kältemittels und damit eine örtliche Überhitzung auftritt, die zu unzulässigen beziehungsweise schädlichen Temperaturspreizungen führen kann.

Beim gezeigten Ausführungsbeispiel ist die Kühlanordnung ferner so ausgelegt, dass sich ein Kälteleistungsverhältnis von der ersten wirksamen Leistungsstufe I im Leistungsbereich LB2 zur zweiten wirksamen Leistungsstufe II im Leistungsbereich LB3 von 1:3 ergibt.

Die Aufteilung der Kälteleistung P_{Ist} in einem solchen Verhältnis erfüllt die zu erwartenden Anforderungen bei einfacher und damit kostengünstiger Gestaltung der Kühlanordnung, da nur ein Flachrohr FR hin und zwei Flachrohre FR zurück realisiert werden müssen. Des Weiteren kann mit einer solchen Kühlanordnung aufwändige Temperatursensorik vermieden werden.

Alternativ sind auch andere Verhältnisse der Kälteleistung P_{Ist} denkbar. So ist beispielsweise vorstellbar, zwei hinführende Kanäle 11' und nur einen rückführenden Kanal 12' vorzusehen (vergleiche auch Fig. 4). Bei einer derartigen Ausgestaltung ergibt sich ein Verhältnis der Kälteleistung P_{Ist} in den genannten Leistungsbereichen LB2 und LB3 von 2:3. Eine solche Abstufung kann für Anwendungsfälle durchaus zweckdienlich sein.

Anhand der Fig. 5 ist eine Kühlanordnung dargestellt, bei der im Unterschied zur Fig. 4 lediglich ein Flachrohr FR mit einem hinführenden Kanal 11 und ein Flachrohr FR mit einem rückführenden Kanal 12 vorhanden sind. Mit dieser Ausführungsform lässt sich ein Verhältnis der Kälteleistung P_{Ist} von 1:2 realisieren.

Beispielsweise ist denkbar, dass in Zusammenhang mit der Auslegung gemäß Fig. 5 das Verfahren derart ausgebildet wird, dass hinsichtlich der verfügbaren Kälteleistung P_{V} ein erster Leistungsbereich LB 1 von 0 kW bis 1,5 kW, ein zweiter Leistungsbereich LB2 von 1,5 kW bis 3 kW und ein dritter Leistungsbereich LB3 über 3 kW regelungstechnisch realisiert wird.

Fällt die verfügbare Kälteleistung P_{V} in den ersten, unteren Leistungsbereich LB1, so wird wiederum der Massenstrom des Kältemittels auf 0 geregelt und die Traktionsbatterie T überhaupt nicht gekühlt. Bei einer verfügbaren Kälteleistung P_{V} im Leistungsbereich LB2 erfolgt eine Kühlung der Traktionsbatterie T in einer ersten kühlenden Leistungsstufe mit einer Kälteleistung P_{Ist} in Höhe von 1,5 kW. Bei einer verfügbaren Kälteleistung P_{V} im dritten Leistungsbereich LB3, erfolgt eine Kühlung der Traktionsbatterie T in einer zweiten kühlenden Leistungsstufe mit einer Kälteleistung P_{Ist} in Höhe von 3 kW.

Auch hierbei trägt die abgestimmte Auslegung der Kühlanordnung dazu bei, dass bei einer Kälteleistung P_{Ist} in Höhe von 1,5 kW das Kältemittel im Kanal 11 erst im Verdampfungsbereich V1 vollständig verdampft ist und bei einer Kälteleistung P_{Ist} in Höhe von 3 kW erst im Kanal 12, und zwar im Verdampfungsbereich V2.

Schließlich zeigt die Fig. 7 ein elektrisch antreibbares Kraftfahrzeug K (Elektrofahrzeug), welches einen Verdampfer 4 mit einer gemäß Fig. 4 dargestellten Kühlanordnung aufweist. Die Traktionsbatterie T des Kraftfahrzeugs K kann also nach dem erfindungsgemäßen Verfahren gekühlt werden.

### BEZUGSZEICHENLISTE

- 1: Kältemittelkreislauf
- 2: Kompressor
- 3: Kondensator
- 4: Verdampfer
- 5: Klimagerät
- 6: Fahrzeugkabine
- 7a, 7b: Kühlleitungen
- 8a, 8b: Knotenpunkte
- 9: Expansionsventile
- 11, 11': hinführender Kanal
- 12, 12': rückführender Kanal
- 13: Verbindungselement; Sammelrohr

- A: Klimakreislauf
- B: Batterie-Kühlkreislauf
- B1-B4: Batteriemodule
- F1, F2: wärmeleitende Kontaktflächen
- FR: Flachrohre
- K: elektrisch antreibbares Kraftfahrzeug
- I1, I2: Längsausrichtung
- LB1-LB3: Leistungsbereiche
- LBX: Leistungsbereich
- P_{G}: Gesamt-Kälteleistung
- P_{Ist}: Kälteleistung, mit der die Batterie gekühlt wird
- P_{K}: Klima-Kälteleistung
- P_{V}: Verfügbare Kälteleistung zur Batteriekühlung
- P_{XU}: Unterer Grenzwert der Leistung im Leistungsbereich LBX
- S1-S7: Schritte
- t: Zeit
- t1-t3: Zeitpunkte
- T: Traktionsbatterie
- V1: erster Verdampfungsbereich
- V2: zweiter Verdampfungsbereich
- 0: nicht kühlende Leistungsstufe
- I: kühlende Leistungsstufe
- II: kühlende Leistungsstufe

## Patentansprüche

1. Kühlanordnung, mit einer mehrere Batteriemodule (B1-B4) aufweisenden Traktionsbatterie (T), wobei ein Kältemittel durch Kanäle (11, 12; 11', 12') senkrecht zu einer Längsausrichtung (I1) der Batteriemodule (B1-B4) an diesen entlanggeführt wird und die Kanäle (11, 12; 11',12') in wärmeleitender Verbindung mit den Batteriemodulen (B1-B4) stehen, wobei wenigstens ein erster Kanal (11; 11') vorhanden ist, in dem das Kältemittel in einer ersten Richtung entlang den Batteriemodulen (B1-B4) zu wenigstens einem Verbindungselement (13) führbar ist und wenigstens ein zweiter Kanal (12; 12'), in dem das Kältemittel in einer zweiten, entgegengesetzten Richtung entlang den Batteriemodulen (B1-B4) wieder zurückführbar ist, wobei die Richtungen parallel zueinander ausgerichtet sind und wobei das Verbindungselement (13) die Kanäle (11, 12; 11', 12') fluidisch miteinander verbindet, **dadurch gekennzeichnet, dass** aus den Kanälen (11, 12; 11', 12') ein Verdampfer (4) für das Kältemittel gebildet ist, wobei die Kanäle (11, 12; 11', 12') Bestandteil von baugleichen Flachrohren (FR) mit einer Längsausrichtung (I2) sind, wobei die Flachrohre (FR) jeweils eine wärmeleitende Kontaktfläche (F1, F2) aufweisen und parallel unter den Batteriemodulen (B1-B4) entlanggeführt sind, wobei die Batteriemodule (B1-B4) mit gleichen Abmessungen quaderförmig ausgebildet sind und eine Längsausrichtung (I1) der Batteriemodule (B1-B4) lotrecht zur Längsausrichtung (I2) der Flachrohre (FR) steht, wobei die Flachrohre (FR) jeweils über die wärmeleitende Kontaktfläche (F1, F2) derart mit den Batteriemodulen (B1-B4) der Traktionsbatterie (T) in wärmeleitender Verbindung stehen, dass sich ein Flächenverhältnis der gesamten Kontaktfläche (F1) des wenigstens einen hinführenden Kanals (11, 11') zur gesamten Kontaktfläche (F2) des wenigstens einen rückführenden Kanals (12; 12') von 1:2 oder 2:1 ergibt, wobei genau drei Flachrohre (FR) vorhanden sind, von denen ein mittleres Flachrohr (FR) wenigstens einen hinführenden Kanal (11) aufweist und von denen zwei äußere Flachrohre (FR) jeweils wenigstens einen rückführenden Kanal (12) aufweisen oder von denen zwei äußere Flachrohre (FR) jeweils wenigstens einen hinführenden Kanal (11') aufweisen und von denen ein mittleres Flachrohr (FR) wenigstens einen rückführenden Kanal (12') aufweist.

2. Elektrisch antreibbares Fahrzeug (K), **gekennzeichnet durch** wenigstens eine Kühlanordnung nach Anspruch 1.

3. Verfahren zum Betrieb einer Kühlanordnung nach Anspruch 1, **dadurch gekennzeichnet, dass** die Kühlanordnung zumindest in einem solchen Betriebsmodus betrieben wird, in dem die Traktionsbatterie (T) ausschließlich in vorbestimmten, diskreten Leistungsstufen (I, II) gekühlt wird, wobei keine kontinuierliche oder stetige Veränderung der Kälteleistung (Pist) erfolgt, sondern die Kühlung stufenweise mit einer bestimmten Leistungsstufe (I, II) erfolgt, wobei in jeder kühlenden Leistungsstufe (I, II) das Kältemittel entweder bereits nach Führung durch den wenigstens einen ersten Kanal (11; 11') im Bereich des Verbindungselementes (13) vollständig verdampft oder dort vollständig verdampft wird oder erst nach vollständiger Rückführung durch den wenigstens einen zweiten Kanal (12; 12').

## Claims

1. Cooling arrangement, comprising a traction battery (T) having a plurality of battery modules (B1-B4), wherein a refrigerant is guided along said modules through channels (11, 12; 11', 12') perpendicularly to a longitudinal orientation (11) of the battery modules (B1-B4) and the channels (11, 12; 11', 12') are thermally conductively connected to the battery modules (B1-B4), wherein at least one first channel (11; 11') is present in which the refrigerant can be guided in a first direction along the battery modules (B1-B4) to at least one connecting element (13) and at least one second channel (12; 12') in which the refrigerant can be guided back again in a second, opposite direction along the battery modules (B1-B4), the directions being oriented in parallel with one another and the connecting element (13) fluidically interconnecting the channels (11, 12; 11', 12'), **characterized in that** an evaporator (4) for the refrigerant is formed from the channels (11, 12; 11', 12'), the channels (11, 12; 11', 12') being part of identical flat tubes (FR) having a longitudinal orientation (I2), the flat tubes (FR) each having a thermally conductive contact surface (F1, F2) and being guided along in parallel under the battery modules (B1-B4), the battery modules (B1-B4) being cuboid-shaped with the same dimensions and a longitudinal orientation (11) of the battery modules (B1-B4) being perpendicular to the longitudinal orientation (I2) of the flat tubes (FR), the flat tubes (FR) each being thermally conductively connected to the battery modules (B1-B4) of the traction battery (T) via the thermally conductive contact surface (F1, F2) such that an area ratio of the total contact surface (F1) of the at least one supply channel (11, 11') to the total contact surface (F2) of the at least one return channel (12; 12') is 1:2 or 2:1, wherein exactly three flat tubes (FR) are present of which a middle flat tube (FR) has at least one supply channel (11) and of which two outer flat tubes (FR) each have at least one return channel (12), or of which two outer flat tubes (FR) each have at least one supply channel (11') and of which a middle flat tube (FR) has at least one return channel (12').

2. Electrically drivable vehicle (K), **characterized by** at least one cooling arrangement according to claim 1.

3. Method for operating a cooling arrangement according to claim 1, **characterized in that** the cooling arrangement is operated at least in such an operating mode in which the traction battery (T) is cooled exclusively in predetermined, discrete power levels (I, II), wherein there is no continuous or constant change in the cooling power (Pist), but rather the cooling takes place in stages with a specific power level (I, II), wherein in each cooling power level (I, II) the refrigerant has either already completely evaporated in the region of the connecting element (13) after being guided through the at least one first channel (11; 11') or is completely evaporated there or is evaporated only after being completely returned through the at least one second channel (12; 12').

## Revendications

1. Agencement de refroidissement, comportant une batterie de traction (T) présentant plusieurs modules de batterie (B1-B4), dans lequel un réfrigérant est guidé par des canaux (11, 12 ; 11', 12') perpendiculairement à une orientation longitudinale (I1) des modules de batterie (B1-B4) le long de ceux-ci et les canaux (11, 12 ; 11', 12') sont en liaison par conduction de chaleur avec les modules de batterie (B1-B4), dans lequel au moins un premier canal (11 ; 11') est prévu, dans lequel le réfrigérant peut être guidé dans une première direction le long des modules de batterie (B1-B4) vers au moins un élément de liaison (13), et au moins un second canal (12 ; 12') est prévu, dans lequel le réfrigérant peut être ramené dans une seconde direction opposée le long des modules de batterie (B1-B4), dans lequel les directions sont orientées parallèlement l'une à l'autre et dans lequel l'élément de liaison (13) relie les canaux (11, 12 ; 11', 12') entre eux de manière fluidique, **caractérisé en ce qu'**un évaporateur (4) pour le réfrigérant est formé à partir des canaux (11, 12 ; 11', 12'), dans lequel les canaux (11, 12 ; 11', 12') font partie de tubes plats (FR) de constructions identiques comportant une orientation longitudinale (I2), dans lequel les tubes plats (FR) présentent respectivement une surface de contact (F1, F2) conductrice de chaleur et sont guidés parallèlement sous les modules de batterie (B1-B4) le long de ceux-ci, dans lequel les modules de batterie (B1-B4) sont réalisés sous forme parallélépipédique et avec des dimensions identiques et une orientation longitudinale (11) des modules de batterie (B1-B4) est perpendiculaire à l'orientation longitudinale (I2) des tubes plats (FR), dans lequel les tubes plats (FR) sont en liaison par conduction de chaleur avec les modules de batterie (B1-B4) de la batterie de traction (T) respectivement par l'intermédiaire de la surface de contact (F1, F2) conductrice de chaleur, de telle sorte qu'il en résulte un rapport de surface entre la surface de contact totale (F1) de l'au moins un canal d'amenée (11, 11') et la surface de contact totale (F2) de l'au moins un canal de retour (12 ; 12') de 1:2 ou de 2:1, dans lequel exactement trois tubes plats (FR) sont prévus, parmi lesquels un tube plat (FR) central présente au moins un canal d'amenée (11) et parmi lesquels deux tubes plats (FR) extérieurs présentent respectivement au moins un canal de retour (12) ou parmi lesquels deux tubes plats (FR) extérieurs présentent respectivement au moins un canal d'amenée (11') et parmi lesquels un tube plat (FR) central présente au moins un canal de retour (12').

2. Véhicule (K) pouvant être entraîné électriquement, **caractérisé par** au moins un agencement de refroidissement selon la revendication 1.

3. Procédé permettant de faire fonctionner un agencement de refroidissement selon la revendication 1, **caractérisé en ce que** l'agencement de refroidissement fonctionne au moins dans un mode de fonctionnement dans lequel la batterie de traction (T) est refroidie exclusivement à des niveaux de puissance (I, II) discrets prédéterminés, dans lequel aucune modification continue ou constante de la puissance frigorifique (Pist) n'est effectuée, mais le refroidissement est effectué par niveaux avec un niveau de puissance (I, II) déterminé, dans lequel, à chaque niveau de puissance (I, II) refroidissant, le réfrigérant est soit déjà entièrement évaporé dans la zone de l'élément de liaison (13) après avoir traversé l'au moins un premier canal (11 ; 11') ou y est complètement évaporé, soit seulement après un retour complet à travers l'au moins un second canal (12 ; 12').
